# EUROPEAN PATENT SPECIFICATION

(11) **EP 1 655 126 B1**
(45) Date of publication and mention of the grant of the patent: **24.01.2007**
(21) Application number: 05022825.3
(22) Date of filing: 19.10.2005
(51) Int. Cl.: B29C 73/22, B60C 19/12

(54) **Pneumatic tire**
Luftreifen
Pneu

(30) Priority: 05.11.2004 JP 2004321914
(43) Date of publication of application: 10.05.2006
(73) Proprietor: HONDA MOTOR CO., Ltd., Tokyo (JP)
(72) Inventor: Yamagiwa, Toshio, Wako-shi, Saitama (JP); Takahashi, Hirohisa, Wako-shi, Saitama (JP)
(74) Representative: Rupp, Christian

(56) References cited:
- EP-A- 0 818 302
- EP-A- 1 065 042
- US-A- 3 903 947
- US-A- 4 239 076
- US-A- 4 895 610

## Description

The present invention relates to a tubeless pneumatic tire having a puncture sealant encapsulated inside of a tread, for example.

### [Background Art]

A pneumatic tire having a puncture sealant encapsulated is known in the art. In the case that a puncture hole is formed through a tread portion by a nail or the like, the puncture sealant in the pneumatic tire functions to prevent the leakage of air from the tire (see Japanese Patent No. 3 497 281 and Japanese Patent Laid-open No. 2000-142018, for example).
More specifically, a tube encapsulating the puncture sealant in the form of a gel is provided on the inner surface of the tread portion of the pneumatic tire in close contact. When a puncture hole is formed through the tread portion and the tube by a nail or the like, the puncture sealant is forced into the puncture hole by utilizing the air pressure in the tire, thus plugging the puncture hole.

In the conventional pneumatic tire mentioned above, however, reducing the elasticity of the tread portion for the purpose of ensuring a cushion performance causes a reduction in elastic force for plugging the puncture hole. Accordingly, it is difficult to ensure both the cushion performance and the puncture hole plugging performance.
It is accordingly an object of the present
The European Patent Application EP 1065042 discloses a tubeless pneumatic tire encapsulating a puncture sealant, the tire comprising the features as recited in the preamble of claim 1 of the present application. invention to provide a pneumatic tire which can sufficiently prevent the air leakage from a puncture hole formed through a tread portion of the tire by a nail or the like as ensuring a cushion performance.

In accordance with the invention as defined in claim 1, there is provided a pneumatic tire comprising an annular tread portion (e.g., a tread portion 2 in the preferred embodiment) and a pair of sidewall portions (e.g., a pair of sidewall portions 3 in the preferred embodiment) extending from the laterally opposite ends of said tread portion toward the radial inside of said tire, wherein an inner liner (e.g., an inner liner 11 in the preferred embodiment) is provided inside of said tread portion with two releasing means (e.g., a first release sheet 10 and a second release sheet 12 in the preferred embodiment) being provided on the inner and outer surfaces of said inner liner, and a sealing chamber (e.g., a sealing chamber 15 in the preferred embodiment) for encapsulating a puncture sealant (e.g., a puncture sealant 14 in the preferred embodiment) is further provided inside of said inner liner.
With this configuration, the inner liner does not adhere to the tread portion, but is freely expandable. Accordingly, a puncture hole formed through the inner liner can be displaced in its closing direction by the elastic force of the inner liner.

In accordance with the invention as defined in claim 2, each of said two releasing means comprises a release sheet.
With this configuration, the adhesion of the inner liner to the tread portion can be prevented with a minimum space.

In accordance with the invention as defined in claim 3, said puncture sealant comprises a sealing liquid (e.g., a sealing liquid 16 in the preferred embodiment) containing fibers (e.g., short fibers 17 in the preferred embodiment).
With this configuration, the fibers forced into the puncture hole of the inner liner by the air pressure in the tire can enlarge the puncture hole to stay therein.

In accordance with the invention as defined in claim 4, said puncture sealant comprises a sealing liquid containing a mixture of fibers and particles (e.g., particles 18 in the preferred embodiment).
With this configuration, a gap between the fibers staying in the puncture hole can be filled with the particles.

In accordance with the invention as defined in claim 5, said release sheet provided on the inner surface of said inner liner is water-soluble.
With this configuration, the water-soluble release sheet is dissolved into the sealing liquid at the time of filling the puncture sealant into the sealing chamber. Accordingly, the water-soluble release sheet has no interference with the fibers contained in the sealing liquid being forced into the puncture hole.

### [Effect of the Invention]

According to the invention as defined in claim 1, the inner liner does not adhere to the tread portion, but is freely expandable, so that the puncture hole of the inner liner can be displaced in its closing direction by the elastic force of the inner liner. Accordingly, the puncture hole at the tread portion can be efficiently closed by the synergistic effect of the contraction of the inner liner and the puncture sealant.

According to the invention as defined in claim 2, in addition to the above effect, the adhesion of the inner liner to the tread portion can be prevented with a minimum space. Accordingly, the capacity of the sealing chamber can be sufficiently ensured.

According to the invention as defined in claim 3, in addition to the above effects, the fibers forced into the puncture hole of the inner liner by the air pressure in the tire can enlarge the puncture hole to stay therein. Accordingly, the puncture hole at the tread portion can be reliably closed by the fibers contained in the sealing liquid and the contraction of the inner liner.

According to the invention as defined in claim 4, in addition to the above effects, the gap between the fibers staying in the puncture hole can be filled with the particles. Accordingly, the reliability of the puncture sealant can be improved.

According to the invention as defined in claim 5, in addition to the above effects, the water-soluble release sheet is dissolved into the sealing liquid at the time of filling the puncture sealant into the sealing chamber, so that the water-soluble release sheet has no interference with the fibers contained in the sealing liquid being forced into the puncture hole. Accordingly, the puncture hole can be closed more reliably.
Fig. 1 is a partially cutaway perspective view of a pneumatic tire according to a preferred embodiment of the present invention.
Fig. 2 is a cross section taken along the line A-A in Fig. 1.
Fig. 3 is an enlarged view of an essential part of the tire shown in Fig. 2.
Fig. 4 is a view similar to Fig. 3, illustrating a condition where a puncture hole is formed by a nail.
Fig. 5 is a view similar to Fig. 4, illustrating a condition where the nail is being removed from the puncture hole.
Fig. 6 is a view similar to Fig. 5, illustrating a condition where the puncture hole is closed by a puncture sealant.
Fig. 7 is a cross section taken along the line B-B in Fig. 6.

A preferred embodiment of the present invention will now be described with reference to the drawings.
This preferred embodiment is a motorcycle tire to which the present invention is applied.

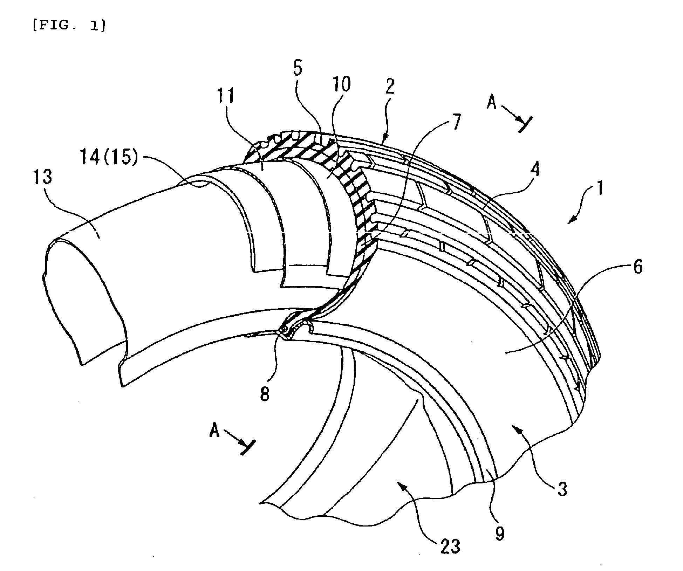

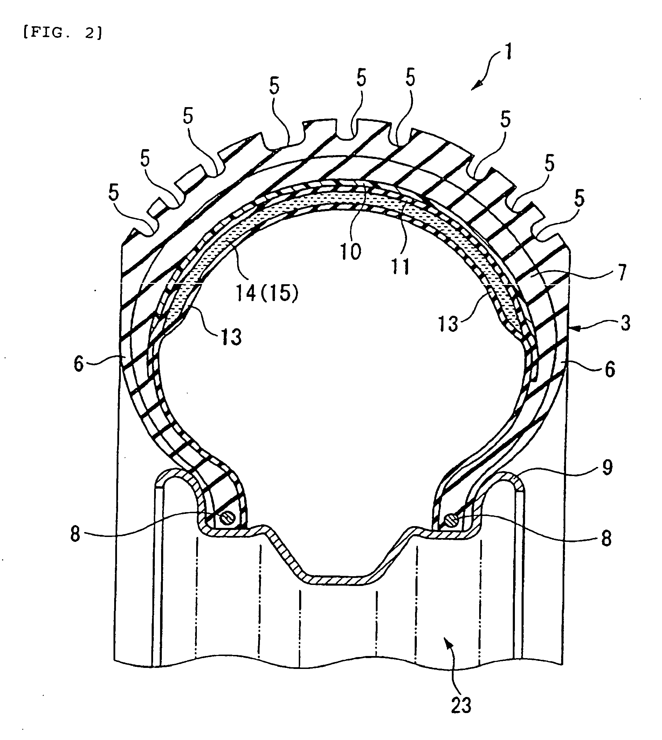

Fig. 1 shows a tubeless pneumatic tire in this preferred embodiment. As shown in Fig. 1, reference numeral 1 generally denotes the tubeless pneumatic tire, which is mounted on a rim 9 of a so-called three-spoke type cast wheel 23. As shown in Fig. 2, the tire 1 is generally composed of a tread portion 2 having an arcuate cross section and a pair of sidewall portions 3 extending from the laterally opposite ends of the tread portion 2 (in the direction along the width of the tire 1) toward the radially inner ends of the tire 1.

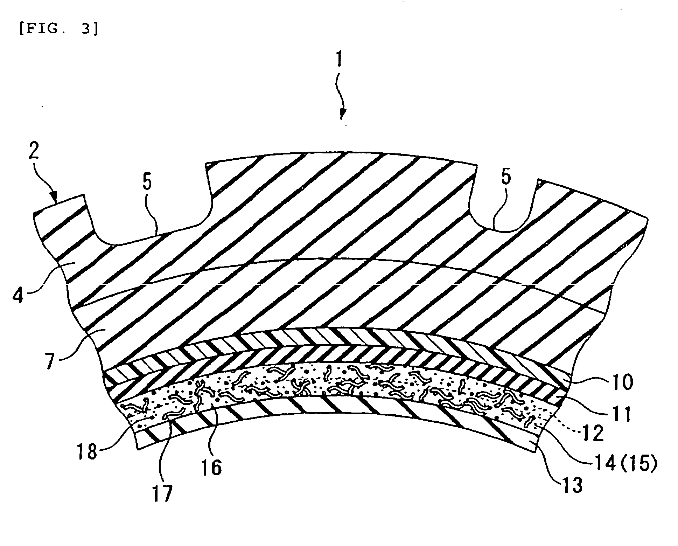

As shown in Fig. 3, the outer surface of the tread portion 2 is formed by a tread rubber 4 adapted to come into contact with a road surface by the rolling of the tire 1. The tread rubber 4 is formed of a rubber material having relatively low elasticity because it is required to ensure a coefficient of friction and to have a high wear resistance. Further, the outer surface of the tread rubber 4 is formed with a tread pattern 5 as grooves or slits, so as to improve the coefficient of friction and wear resistance of the tread rubber 4 and also to improve the performance of water ejection from the tread rubber 4. On the other hand, the outer surface of each sidewall portion 3 is formed by a rubber sidewall 6 integral with the tread rubber 4.

The inner surface of the tread portion 2 and the sidewall portions 3 is uniformly formed with a carcass ply 7 for bearing a load. The carcass ply 7 is formed by arranging a plurality of fibrous carcass cords in a direction inclined a predetermined angle with respect to the circumferential direction of the tire 1. A pair of bead wires 8 are embedded in the opposite end portions of the carcass ply 7. Thus, the tread rubber 4 and the rubber sidewalls 6 are attached to the outer circumferential surface of the carcass ply 7 to thereby integrate the tread portion 2 and the sidewall portions 3. The tire 1 is generally classified into a radial ply tire and a bias ply tire according to the angle of inclination of the carcass cords, the material of the carcass cords, etc. In this preferred embodiment, the tire 1 is a bias ply tire.

Each bead wire 8 is formed as a ring of high-carbon steel wires bundled together, and has a function of fixing the opposite ends of the carcass ply 7 to the rim 9 of the cast wheel 23 to thereby retain the air pressure inside the tire 1 and another function of preventing the separation of the tire 1 from the rim 9 in the case of puncture of the tire 1.

A first release sheet (release sheet) 10 is attached to the inner surface of the carcass ply 7 over the range from near the upper end of one of the sidewall portions 3 through the tread portion 2 to near the upper end of the other sidewall portion 3. The first release sheet 10 is provided for the purpose of preventing the adhesion of an inner liner 11 to be hereinafter described to the carcass ply 7 in the process of vulcanization for the tire 1.

The inner liner 11 is provided inside of the first release sheet 10 over the range from a position radially inside of one end of the first release sheet 10 in one of the sidewall portions 3, i.e., from near the radial center of one of the sidewall portions 3 through the tread portion 2 to near the radial center of the other sidewall portion 3. The inner liner 11 is formed of a rubber material having high hermeticity and high elasticity, using natural rubber or the like as a raw material.

A water-soluble second release sheet (release sheet) 12 (whose position before dissolution into water being shown by a broken line in Fig. 3 only) is provided inside of the inner liner 11. Like the first release sheet 10, the second release sheet 12 is provided for the purpose of preventing the adhesion of the inner liner 11 to a member adjacent thereto in the process of vulcanization. Since the second release sheet 12 is soluble in water, it is dissolved into the water contained in a puncture sealant 14 at the time of filling the puncture sealant 14 into a sealing chamber 15 to be hereinafter described. Accordingly, the inner liner 11 can expand and contract except its opposite end portions fixed to the carcass ply 7. Further, since the second release sheet 12 is dissolved into the water contained in the puncture sealant 14, the puncture sealant 14 can easily act on the inner liner 11.

An inside liner 13 is provided inside of the sidewall portions 3 and the tread portion 2 over the range from the radially inner end of one of the sidewall portions 3 through the inside of the second release sheet 12 to the radially inner end of the other sidewall portion 3. The inside liner 13 is formed of a rubber material similar to that of the inner liner 11. The inside liner 13 is attached to the inner surface of the carcass ply 7 at its opposite end portions and to the inner surface of the inner liner 11 at its opposite end portions. The opposite end portions of the second release sheet 12 are fixed to the inside layer 13, thereby defining the sealing chamber 15 for encapsulating the puncture sealant 14 as a closed space between the inside liner 13 and the second release sheet 12. The sealing chamber 15 is filled with the puncture sealant 14. Since the second release sheet 12 is dissolved in the water contained in the puncture sealant 14, the sealing chamber 15 is formed between the inside liner 13 and the inner liner 11. Accordingly, the tire 1 has a three-layer structure consisting of the tread rubber 4, the inner liner 11, and the inside liner 13.

The puncture sealant 14 functions to prevent the leakage of air from the tire 1 in the case that a puncture hole or wound made by a nail or the like reaches the inside space of the tire 1. The puncture sealant 14 is composed of a sealing liquid 16 in the form of a gel at ordinary temperature (e.g., 20°C), short fibers (fibers) 17 mixed in the sealing liquid 16, and particles 18 of ceramic or the like mixed in the sealing liquid 16. The short fibers 17 and the particles 18 function to close a puncture hole made by a nail or the like. More specifically, the short fibers 17 enter the puncture hole in association with the flow of the puncture sealant 14 through the puncture hole, and the particles 18 enter the gap between the short fibers 17 present in the puncture hole, The configuration of this puncture sealant 14 is merely illustrative, and various puncture sealants capable of sealing the puncture hole may be used in the present invention.

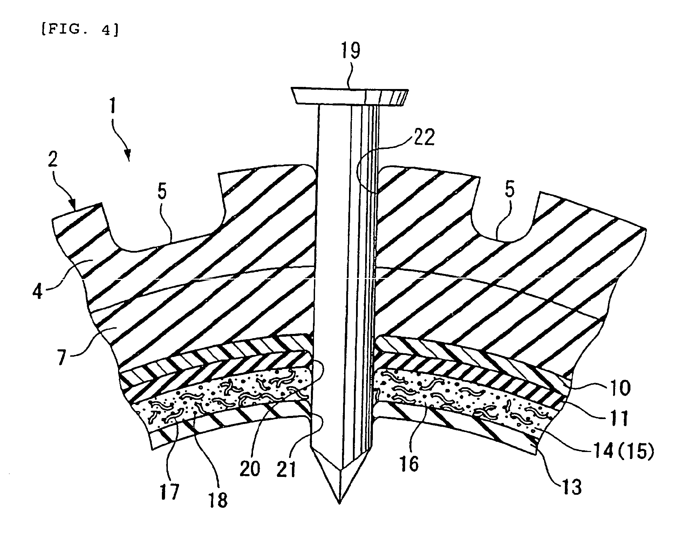

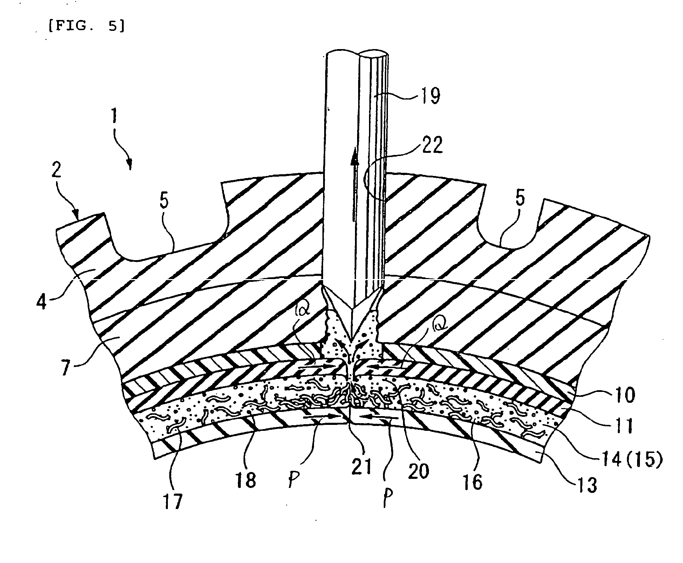

The operation will now be described with reference to Figs. 4 to 7. When a nail 19 pierces through the tread portion 2 as shown in Fig. 4, holes 22, 20, and 21 due to the piercing of the nail 9 are formed through the tread rubber 4, the inner liner 11, and the inside liner 13, respectively. At this time, the peripheries of the holes 20 and 21 of the inner liner 11 and the inside liner 13 are drawn toward the inside of the tire 1 as shown in Fig. 4. When the nail 19 is displaced in a direction of coming out of the tread portion 2 as shown in Fig. 5, the holes 21 and 20 of the inside liner 13 and the inner liner 11 both having elasticity higher than that of the tread rubber 4 undergo forces in a direction of closing the holes 21 and 20 (as shown by arrows P and Q in Fig. 5). Accordingly, the hole 21 of the inside liner 13 freely expandable at the tread portion 2 is completely closed by the high elasticity of the inside liner 13, and the inner liner 11 permitted to slide on the first release sheet 10 starts to contract.

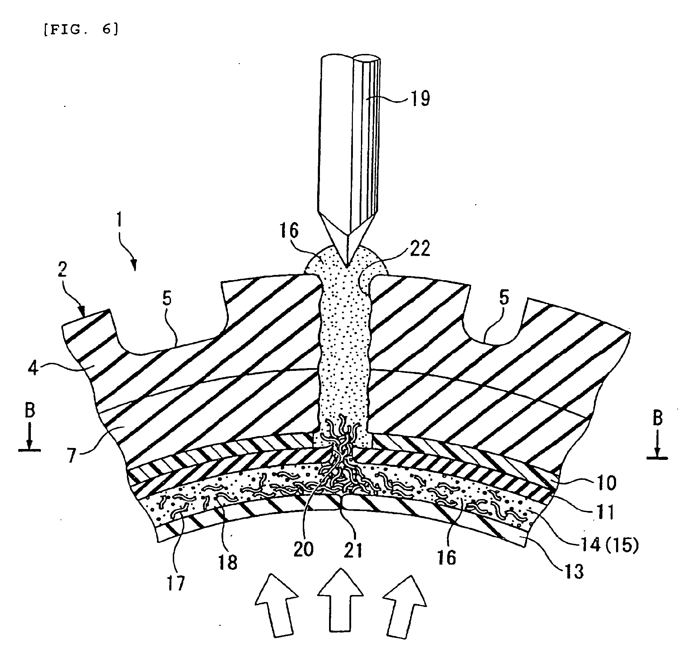

However, the air pressure inside the tire 1 cannot be suppressed by the elastic forces of the inside liner 13 and the inner liner 11, so that the puncture sealant 14 is forced by the air pressure in the tire 1 to flow out through the hole 20 of the inner liner 11 into the hole 22 of the tread rubber 4 and to finally come out of the hole 22 as shown in Fig. 6. At this time, the flow of the puncture sealant 14 toward the inside of the tire 1 is suppressed by the air pressure in the tire 1.

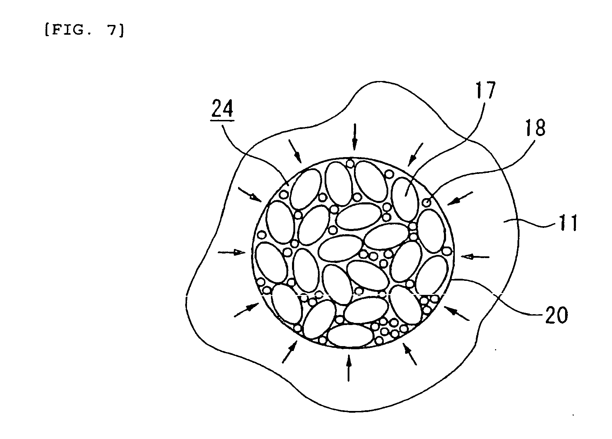

In association with the flow of the puncture sealant 14 through the hole 22 toward the outside of the tire 1, the short fibers 17 contained in the puncture sealant 14 are gradually forced into the hole 20 of the inner liner 11 as shown in Fig. 6, thereby gradually closing the hole 20. At the same time, as shown in Fig. 7, the particles 18 contained in the puncture sealant 14 are also forced into the hole 20 of the inner liner 11 to enter the gap 24 between the short fibers 17, thereby filling the gap 24. Thus, the hole 20 of the inner liner 11 is completely closed by the puncture sealant 14.

When the air pressure in the tire 1 becomes balanced to the elastic force of the inner liner 11 (as shown by arrows in Fig. 7) to cause the stop of the flow of the puncture sealant 14, the diameter of the hole 20 is slightly enlarged by the short fibers 17 and the particles 18 as compared with that shown in Fig. 5. As a result, the closed condition of the hole 20 by the short fibers 17 and the particles 18 can be reliably retained by the elastic force of the inner liner 11.

According to this preferred embodiment, the inner liner 11 does not adhere to the tread portion 2, but it is permitted to slide on the first release sheet 10 and is freely expandable. Accordingly, the hole 20 of the inner liner 11 can be displaced in its closing direction (can be reduced in diameter) by the elastic force of the inner liner 11. As a result, the hole 20 of the inner liner 11 can be efficiently closed by the synergistic effect of the contraction of the inner liner 11 and the puncture sealant 14.

Further, the short fibers 17 contained in the puncture sealant 14 forced into the hole 20 of the inner liner 11 by the air pressure in the tire 1 can be retained as plugging means on the periphery of the hole 20 being closed. Accordingly, the synergistic effect of the short fibers 17, the particles 18, and the sealing liquid 16 of the puncture sealant 14 can be exhibited, and the hole 20 of the inner liner 11 can be reliably closed by this synergistic effect and the contraction of the inner liner 11.

By forming the three-layer structure consisting of the tread rubber 4, the inner liner 11, and the inside liner 13, a tire structure similar to that of a tube pneumatic tire having an inner tube can be obtained. Accordingly, a puncture sealant whose performance has been proven in a conventional tube pneumatic tire can be utilized to thereby reduce the cost and improve the reliability.

The present invention is not limited to this preferred embodiment mentioned above, but may be applied to any pneumatic tires for a vehicle such as an automobile other than a motorcycle and for an aircraft, for example.

### [Description of Reference Numerals]

- 2:: tread portion
- 3:: sidewall portion
- 10:: first release sheet (release sheet, releasing means)
- 12:: second release sheet (release sheet, releasing means)
- 11:: inner liner
- 15:: sealing chamber
- 13:: inside liner
- 14:: puncture sealant
- 16:: sealing liquid
- 17:: short fibers (fibers)
- 18:: particles

## Claims

1. A pneumatic tire (1) comprising an annular tread portion (2), a pair of sidewall portions (3) extending from the laterally opposite ends of said tread portion (2) toward the radial inside of said tire, an inner liner (11) provided inside of said tread portion (2) and a sealing chamber (15) for encapsulating a puncture sealant (14), said sealing chamber (15) being provided inside of said inner liner (11), said pneumatic tire (1) being **characterised in that** two releasing means (10, 12) are provided on the inner and outer surface of said inner liner (11).

2. The pneumatic tire according to claim 1, wherein each of said two releasing means comprises a release sheet (10, 12).

3. The pneumatic tire according to any of the preceding claims, wherein said puncture sealant (14) comprises a sealing liquid (16) containing fibers (17).

4. The pneumatic tire according to any of the preceding claims, wherein said puncture sealant (14) comprises a sealing liquid (16) containing a mixture of fibers (17) and particles (18).

5. The pneumatic tire according to any of the preceding claims 2 to 4, wherein said release sheets (10, 12) provided on the inner surface of said inner liner (11) are water-soluble.

## Patentansprüche

1. Luftreifen (1), aufweisend einen ringförmigen Laufflächenabschnitt (2), ein sich von den seitlich gegenüberliegenden Enden des Laufflächenabschnitts (2) zu der radialen Innenseite des Reifens hin erstreckendes Paar Seitenwandabschnitte (3), eine innerhalb des Laufflächenabschnitts (2) vorgesehene Einlage (11) und eine Abdichtkammer (15) für das Verkapseln eines Einstichabdichtmittels (14), wobei die Abdichtkammer (15) innerhalb der Einlage (11) vorgesehen ist, wobei der Luftreifen (1) **dadurch gekennzeichnet ist, dass** zwei Freigebevorrichtungen (10, 12) an der Innen- und Außenoberfläche der Einlage (11) vorgesehen sind.

2. Luftreifen nach Anspruch 1, wobei jede der zwei Freigebevorrichtungen eine Freigebefolie (10, 12) aufweist.

3. Luftreifen nach einem der vorhergehenden Ansprüche, wobei das Einstichabdichtmittel (14) eine Fasern (17) enthaltende Abdichtflüssigkeit (16) aufweist.

4. Luftreifen nach einem der vorhergehenden Ansprüche, wobei das Einstichabdichtmittel (14) eine eine Mischung aus Fasern (17) und Partikeln (18) enthaltende Abdichtflüssigkeit (16) aufweist.

5. Luftreifen nach einem der vorhergehenden Ansprüche 2 bis 4, wobei die an der Innenoberfläche der Einlage (11) vorgesehenen Freigebefolien (10, 12) wasserlöslich sind.

## Revendications

1. Pneu (1) comprenant une portion de bande de roulement annulaire (2), une paire de portions de paroi latérale (3) s'étendant depuis les extrémités opposées latéralement de ladite portion de bande de roulement (2) vers l'intérieur radial dudit pneu, un revêtement interne (11) disposé à l'intérieur de ladite portion de bande de roulement (2) et une chambre d'étanchéité (15) permettant d'encapsuler un produit d'étanchéité contre les crevaisons (14), ladite chambre d'étanchéité (15) étant prévue à l'intérieur dudit revêtement interne (11), ledit pneu (1) étant **caractérisé en ce que** deux moyens de libération (10, 12) sont aménagés à la surface interne et à la surface externe dudit revêtement interne (11).

2. Pneu selon la revendication 1, dans lequel chacun desdits deux moyens de libération comprend une feuille de libération (10, 12).

3. Pneu selon l'une quelconque des revendications précédentes, dans lequel ledit produit d'étanchéité contre les crevaisons (14) comprend un liquide d'étanchéité (16) contenant des fibres (17).

4. Pneu selon l'une quelconque des revendications précédentes, dans lequel ledit produit d'étanchéité contre les crevaisons (14) comprend un liquide d'étanchéité (16) contenant un mélange de fibres (17) et de particules (18).

5. Pneu selon l'une quelconque des revendications 2 à 4, dans lequel lesdites feuilles de libération (10, 12) disposées à la surface interne dudit revêtement interne (11) sont solubles dans l'eau.
